# EUROPEAN PATENT SPECIFICATION

(11) **EP 3 364 017 B1**
(45) Date of publication and mention of the grant of the patent: **26.08.2020**
(21) Application number: 18157421.1
(22) Date of filing: 19.02.2018
(51) Int. Cl.: F02P 15/00, F02B 61/02, B62M 7/04, B62K 11/04, F02P 3/00, F02P 7/02, F02P 13/00

(54) **STRADDLED VEHICLE**
GRÄTSCHSITZFAHRZEUG
VÉHICULE À ENFOURCHER

(30) Priority: 20.02.2017 JP 2017029178
(43) Date of publication of application: 22.08.2018
(73) Proprietor: Yamaha Hatsudoki Kabushiki Kaisha, Iwata-shi Shizuoka 438-8501 (JP)
(72) Inventor: YAGI, Kyohei, Iwata-shi, Shizuoka 438-8501 (JP)
(74) Representative: Grünecker Patent- und Rechtsanwälte PartG mbB

(56) References cited:
- EP-A1- 1 950 129
- EP-A2- 1 304 544
- EP-A2- 1 369 560
- WO-A1-2015/142297
- DE-A1- 2 745 061
- JP-A- S6 019 948
- JP-A- H10 310 090
- JP-A- S59 194 414
- JP-A- S61 205 575
- JP-A- 2015 157 598
- JP-A- 2016 000 600
- US-A- 4 437 535
- US-A- 5 205 244
- US-A1- 2013 167 802
- US-A1- 2014 262 571

## Description

This invention relates to a straddled vehicle having an ignition coil.

Document JP 2016 000600 A discloses a straddled vehicle with features according to the preamble. Furthermore, Japanese Unexamined Patent Publication No. 2011-51417 discloses a two-wheeled motor vehicle. The two-wheeled motor vehicle includes a body frame and an engine. The body frame has a head tube and a pair of right and left main frames. Each main frame extends rearward and downward from the head tube. The engine is supported by the body frame. Other straddled vehicles with ignition coil located on their frame are shown in JPS6019948A, US5205244A, WO2015142297A1, EP1369560A2, US2013167802A1, DE2745061A1, JP2015157598A and JPH10310090A.

Many vehicle components are arranged between the pair of main frames. The vehicle components arranged between the pair of main frames are a starter motor, a regulator, an ignition coil, a main harness, and a sub-harness, for example.

However, the conventional example with such construction has the following problem.

The many vehicle components are densely arranged between the pair of main frames. It has therefore been a relatively difficult operation to arrange each vehicle component appropriately between the main frames.

Moreover, it has been a tendency of recent years that the number of vehicle components is on the increase. This is due to compliance with environmental regulations, improvement in fuel efficiency, assistance to braking operation, and so on. A further increase in the number of vehicle components will make it still more difficult to arrange each vehicle component appropriately between the main frames.

The ignition coil is connected to a plug cord. When the ignition coil is disposed between the pair of main frames, it is highly likely that the plug cord needs to be placed near the other vehicle components arranged densely. It is therefore highly likely that the plug cord needs to be curved in order to circumvent the other vehicle components. However, the plug cord has a relatively large outside diameter, and is relatively inflexible. It is therefore hard to bend the plug cord with a small radius of curvature. Thus, it is difficult to route the inflexible plug cord in a way to avoid the vehicle components arranged densely.

This invention has been made having regard to the state of the art noted above, and its object is to provide a straddled vehicle which facilitates arranging of vehicle components between main frames, and facilitates routing of a plug cord.

To fulfill the above object, this invention provides a straddled vehicle with the features of claim 1.

The ignition coil is located, in the plan view of the vehicle, in one of a position rightward of the right main frame and a position leftward of the left main frame. That is, the ignition coil is not located in the space (hereinafter called the "internal space" as appropriate) formed leftward of the right main frame and rightward of the left main frame. It is therefore possible to arrange easily vehicle components other than the ignition coil in the internal space.

The plug cord is connected to the ignition coil. Since the ignition coil is not located in the internal space, the necessity to place the plug cord near the vehicle components (hereinafter called the "internal vehicle components") arranged in the internal space can be reduced. This can reduce the necessity to curve the plug cord in order to circumvent the internal vehicle components. The plug cord can therefore be routed easily, while avoiding the internal vehicle components, even if the plug cord is hard to bend.

As described above, this straddled vehicle allows the other vehicle components to be arranged easily in the internal space, and the plug cord to be routed easily.

When the plug cord contacts at least one of the right main frame and the left main frame, the voltage of the plug cord will drop. To inhibit this voltage drop, it may be better to secure a clearance between the plug cord and each main frame, or to place an insulator between the plug cord and each main frame. However, avoiding contact between the plug cord and the right main frame, and contact between the plug cord and the left main frame, will increase difficulty in routing the plug cord.

According to this straddled vehicle, the ignition coil is located, in the plan view of the vehicle, either rightward of the right main frame or leftward of the left main frame. The plug cord is therefore located in a position sufficiently distant from at least one of the right main frame and left main frame. Consequently, the plug cord need not be curved in order to avoid contact with at least one of the right main frame and left main frame. Thus, even in the case of avoiding contact between the plug cord and the right main frame and contact between the plug cord and the left main frame, the plug cord can be routed with increased ease according to this straddled vehicle.

In the above straddled vehicle, the ignition coil overlaps at least one of the right main frame and the left main frame in the side view of the vehicle. The ignition coil is located in substantially the same height position as at least one of the right main frame and left main frame. The ignition coil can therefore be attached easily to one of the right main frame and left main frame.

In the above straddled vehicle, it is preferred that the engine includes a cylinder unit having a combustion chamber; the spark plug is attached to the cylinder unit; and the ignition coil is located more forward than a rear end of the cylinder unit. The spark plug is attached to the cylinder unit, and the ignition coil is located more forward than the rear end of the cylinder unit, whereby the distance between the ignition coil and spark plug can be made relatively short. This can reduce the length of the plug cord. Consequently, the plug cord can be routed all the more easily. Further, the voltage drop in the plug cord can be inhibited.

In the above straddled vehicle, it is preferred that the spark plug is located below the right main frame and the left main frame in the side view of the vehicle. The spark plug is located in a position lower than the internal space, which can further reduce the necessity to place the plug cord near the internal vehicle components. Thus, the plug cord can be routed all the more easily. Further, the spark plug is located in a position lower than the right main frame and the left main frame, which can reduce the necessity to curve the plug cord in order to avoid contact with the right main frame and contact with the left main frame. Thus, the plug cord can be routed all the more easily.

In the above straddled vehicle, it is preferred that both the ignition coil and the spark plug are arranged more rightward than the vehicle center axis or more leftward than the vehicle center axis. Since both the ignition coil and spark plug are arranged on the same side of the vehicle center axis, the distance between the ignition coil and spark plug can be made relatively short. This can reduce the length of the plug cord. Consequently, the plug cord can be routed all the more easily. Further, voltage drop in the plug cord can be inhibited.

In the above straddled vehicle, it is preferred that the spark plug is attached to a side portion of the engine. With this construction, the distance between the ignition coil and spark plug can be made relatively short. This can reduce the length of the plug cord. Consequently, the plug cord can be routed all the more easily. Further, voltage drop in the plug cord can be inhibited.

In the above straddled vehicle, it is preferred that the plug cord is connected to a lower part of the ignition coil. With this construction, the pathway of the plug cord linking the ignition coil and spark plug can be simplified. The plug cord can therefore be routed all the more easily.

In the above straddled vehicle, it is preferred that the plug cord includes a first end connected to the ignition coil; and the first end extends downward from the ignition coil in the side view of the vehicle. With this construction, the pathway of the plug cord can be simplified. The plug cord can therefore be routed all the more easily.

In the above straddled vehicle, it is preferred that the plug cord is supported only by the ignition coil and the spark plug. The straddled vehicle does not have a support member exclusively for supporting the plug cord. The plug cord therefore never receives stress from a support member, and the plug cord is never corrected by a support member. Thus, the plug cord can be routed all the more appropriately. Further, the components relating to the ignition device can be reduced in number, and the construction of the straddled vehicle can be simplified.

It is preferred that the above straddled vehicle further comprises an exterior cover overlapping the ignition coil in the side view of the vehicle. With this construction, the ignition coil is invisible in the side view of the vehicle. Consequently, the outward appearance of the straddled vehicle is never spoiled.

It is preferred that the above straddled vehicle further comprises an external vehicle component disposed in one of a position rightward of the right main frame and leftward of the plug cord, and a position leftward of the left main frame and rightward of the plug cord; wherein the external vehicle component overlaps at least part of the plug cord in the side view of the vehicle. The external vehicle component is located between either the right main frame or the left main frame and the plug cord. When, for example, at least part of the plug cord is located rightward of the right main frame, the external vehicle component is located in a position rightward of the right main frame and leftward of the plug cord. When, for example, at least part of the plug cord is located leftward of the left main frame, the external vehicle component is located in a position leftward of the left main frame and rightward of the plug cord. Therefore, even if the plug cord should bend, the external vehicle component could conveniently prevent the plug cord from contacting one of the right main frame and left main frame.

It is preferred that the above straddled vehicle further comprises a plurality of internal vehicle components arranged leftward of the right main frame and rightward of the left main frame in the plan view of the vehicle. Since the ignition coil is not located in the internal space, the plurality of internal vehicle components can easily be arranged in the internal space.

In the above straddled vehicle, it is preferred that the plurality of internal vehicle components include a hydraulic unit for regulating brake's hydraulic pressure. Since the ignition coil is not located in the internal space, the hydraulic unit can easily be placed in the internal space.

In the above straddled vehicle, it is preferred that the engine is a single-cylinder engine. Since the engine is a single-cylinder engine, the number of spark plugs is one, and the number of plug cords is also one. Thus, an installation space for the plug cord can be secured easily, and the plug cord can be routed with increased ease.

It is preferred that the above straddled vehicle further comprises a fuel tank disposed above the engine; wherein at least part of the fuel tank is located higher than the right main frame and the left main frame in the side view of the vehicle. The fuel tank is located above the engine, and at least part of the fuel tank is located in a position higher than the right main frame and the left main frame. Consequently, air currents occurring at the time of traveling flow through the internal space less easily. Heat can therefore all the more easily be stored in the internal space. Since the ignition coil is not located in such internal space, the ignition coil hardly undergoes the influence of the heat.

For the purpose of illustrating the invention, there are shown in the drawings several forms which are presently preferred, it being understood, however, that the invention is not limited to the precise arrangement and instrumentalities shown.
Fig. 1 is a right side view of a straddled vehicle according to an embodiment.
Fig. 2 is a right side view of a portion of the straddled vehicle.
Fig. 3 is a plan view of a portion of the straddled vehicle.
Fig. 4 is a plan view of a portion of the straddled vehicle.
Fig. 5 is a sectional view of a right main frame taken on line V-V of Fig. 2.
Fig. 6 is a right side view of a portion of the straddled vehicle.
Fig. 7 is a front view of a portion of the straddled vehicle.
Fig. 8 is a right side view of a portion of a straddled vehicle according to a modified embodiment.

A straddled vehicle 1 according to this invention will be described hereinafter with reference to the drawings.

### 1. Outline construction of the straddled vehicle

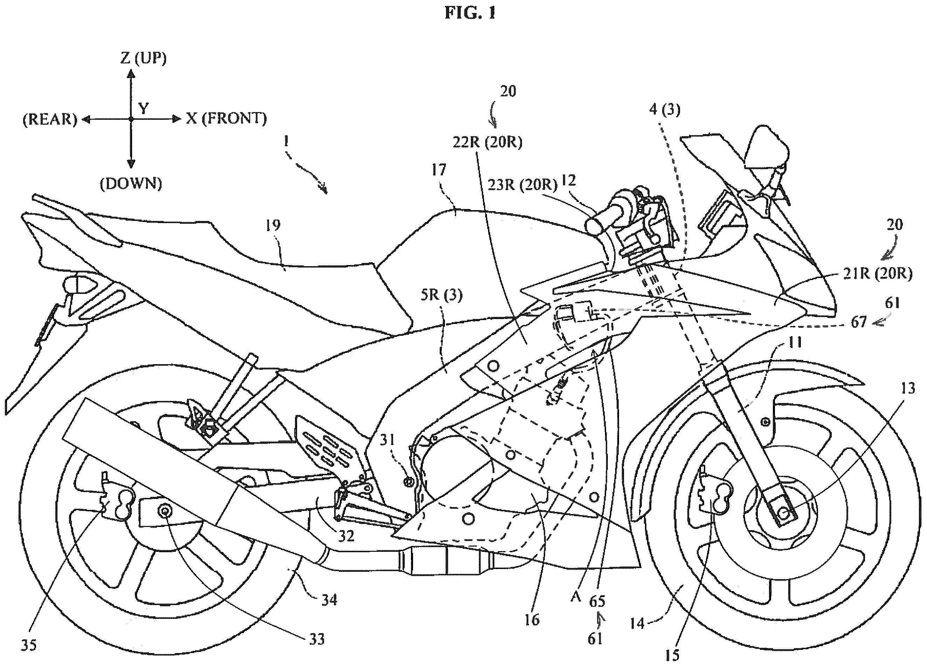

Fig. 1 is a right side view of a straddled vehicle according to an embodiment.

Fig. 1 shows a longitudinal direction X, a transverse direction Y, and an up-down direction Z of the straddled vehicle 1. The longitudinal direction X, transverse direction Y, and up-down direction Z are defined with reference to a rider mounted on the straddled vehicle 1. The longitudinal direction X, transverse direction Y, and up-down direction Z are perpendicular to one another.

The terms "forward", "rearward", "upward", "downward", rightward", and "leftward" mean "forward", "rearward", "upward", "downward", rightward", and "leftward" as seen from the rider mounted on the straddled vehicle 1. In this specification, unless otherwise specified, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. In this specification, arrangements specified by the terms "forward", "rearward", "upward", "downward", "rightward", and "leftward" mean the following: "Forward/rearward/upward/rightward/leftward of ..." as well as "More forward/rearward/upward/rightward/leftward than ..." specify embodiments in which two related components have to overlap with each other at least partially in a view along the respective direction "forward/rearward/upward/downward/rightward/leftward".
"More forward/rearward/upward/downward/rightward/leftward than ..." additionally specify embodiments in which the two related components do not necessaryliy have to overlap with each other in a view along the respective direction "forward/rearward/upward/downward/rightward/leftward".

The drawings show, by way of reference, forward, rearward, upward, downward, rightward, and leftward as appropriate.

The straddled vehicle 1 is a street type vehicle. The straddled vehicle 1 has a body frame 3. The body frame 3 includes a head tube 4. The head tube 4 is disposed at the front of the straddled vehicle 1.

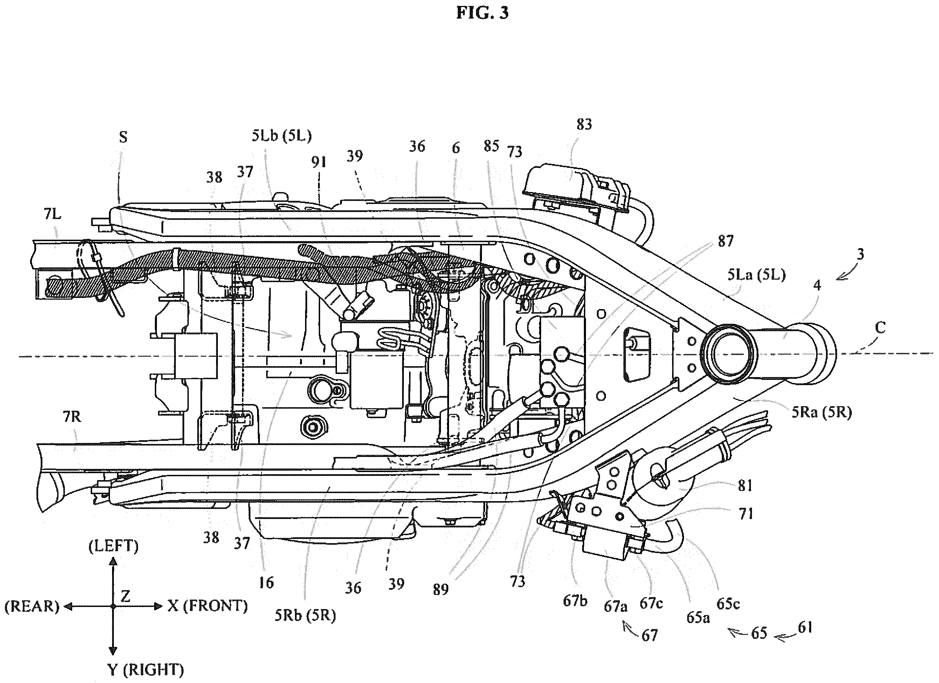

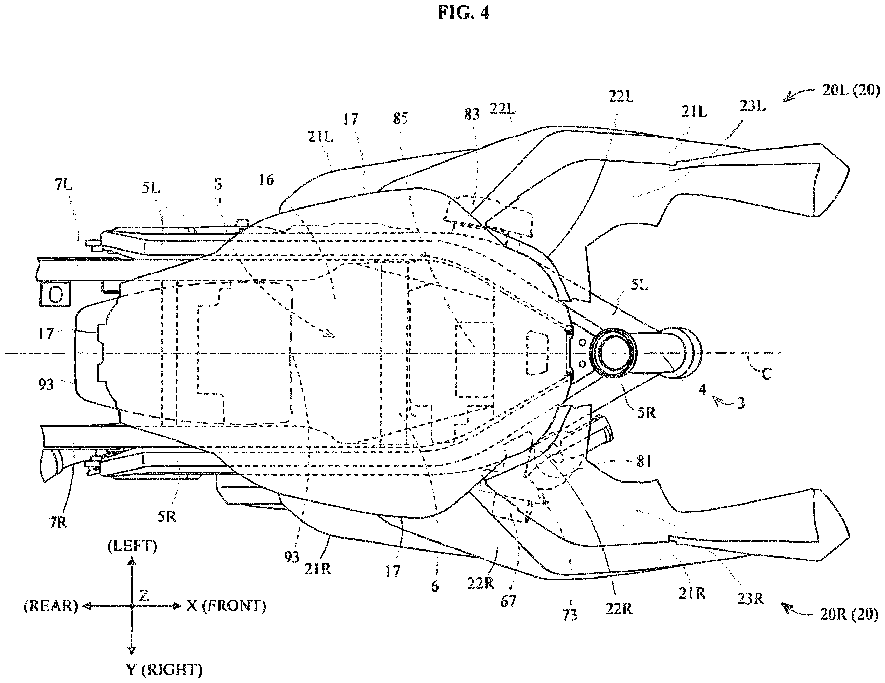

The body frame 3 includes a right main frame 5R and a left main frame 5L. The left main frame 5L is shown in Figs. 3, 4 and so on described hereinafter. The right main frame 5R is connected to the head tube 4. The right main frame 5R extends rearward from the head tube 4. More particularly, the right main frame 5R extends rearward and downward from the head tube 4. The left main frame 5L has the same construction and shape as the right main frame 5R except for being bilaterally symmetric therewith. That is, in the side view of the vehicle, the left main frame 5L overlaps the right main frame 5R. The left main frame 5L is connected to the head tube 4. The left main frame 5L extends rearward from the head tube 4.

The straddled vehicle 1 has a steering device 11, a handlebar 12, an axle 13, and a front wheel 14. The steering device 11 is supported by the head tube 4. The steering device 11 is rotatable relative to the head tube 4. The handlebar 12 is connected to an upper part of the steering device 11. The axle 13 is supported by a lower part of the steering device 11. The front wheel 14 is supported by the axle 13. The handlebar 12 is operable by the rider of the straddled vehicle 1.

The straddled vehicle 1 has a front wheel brake 15. The front wheel brake 15 brakes the front wheel 14. The front wheel brake 15 is operable by the hydraulic pressure of a brake fluid.

The straddled vehicle 1 has an engine 16. The engine 16 generates power. The engine 16 is supported by the body frame 3.

The straddled vehicle 1 has a fuel tank 17. The fuel tank 17 stores a fuel. The fuel tank 17 is disposed above the engine 16.

The straddled vehicle 1 has a seat 19. The seat 19 is disposed behind the fuel tank 17. At least part of the seat 19 is disposed in the same height position as the fuel tank 17.

The straddled vehicle 1 has a side cover 20. The side cover 20, in the side view of the vehicle, overlaps part of the right main frame 5R and part of the left main frame 5L. The side cover 20 is an example of the exterior cover in this invention.

The straddled vehicle 1 has a pivot shaft 31, a rear arm 32, an axle 33, and a rear wheel 34. The pivot shaft 31 is disposed behind the engine 16. The pivot shaft 31 is supported by the body frame 3. The pivot shaft 31 is supported by the right main frame 5R and left main frame 5L. The rear arm 32 is supported by the pivot shaft 31. The rear arm 32 extends rearward from the pivot shaft 31. The rear arm 32 is swingable about the pivot shaft 31. The axle 33 is supported by a rear part of the rear arm 32. The rear wheel 34 is supported by the axle 33. The straddled vehicle 1 further includes a transmission mechanism not shown. The transmission mechanism transmits the power generated by the engine 16 to the rear wheel 34. The rear wheel 34 is rotatable by the power transmitted through the transmission mechanism.

The straddled vehicle 1 has a rear wheel brake 35. The rear wheel brake 35 brakes the rear wheel 34. The rear wheel brake 35 is operable by the hydraulic pressure of the brake fluid.

The rider of the straddled vehicle 1 sits down straddling the seat 19, takes a knee grip, and grasps the handlebar 12. The knee grip means holding a part of the straddled vehicle 1 between both legs of the rider. The part of the straddled vehicle 1 is, for example, a part more forward than the seat 19. Specifically, the part of the straddled vehicle 1 includes the right main frame 5R, left main frame 5L, fuel tank 17, and side cover 20.

### 2. Details of the body frame 3

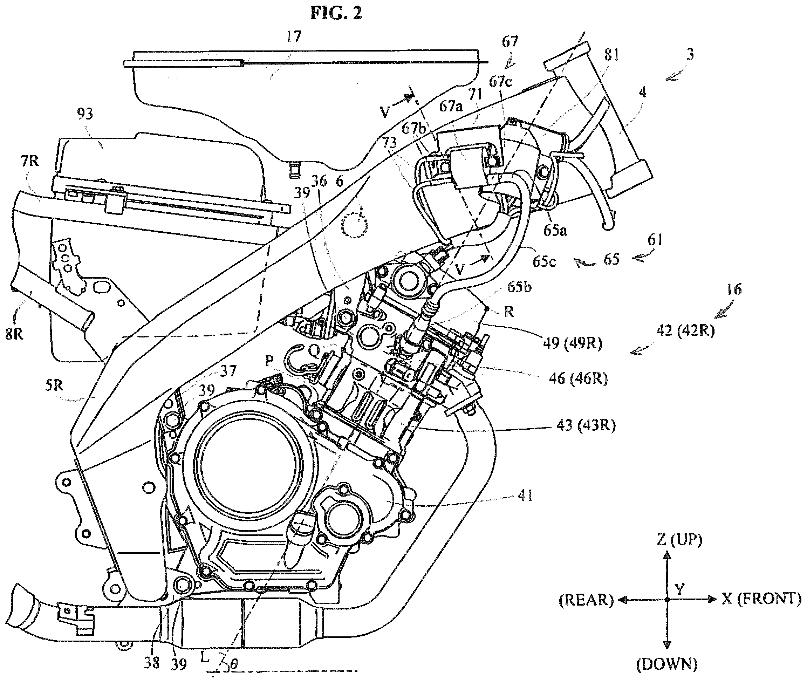

Fig. 2 is a right side view of a portion of the straddled vehicle according to the embodiment. Figs. 3 and 4 are each a plan view of a portion of the straddled vehicle according to the embodiment. Fig. 2 omits illustration of the side cover 20 and so on. Fig. 3 omits illustration of the fuel tank 17, seat 19, and so on. Fig. 4 omits illustration of the seat 19 and so on.

Figs. 3 and 4 show a vehicle center axis C. The vehicle center axis C extends in the longitudinal direction X. The vehicle center axis C passes through the center of the straddled vehicle 1. Of the transverse direction Y, the direction approaching the vehicle center axis C will be called "inward in the transverse direction Y" as appropriate. Of the transverse direction Y, the direction moving away from the vehicle center axis C will be called "outward in the transverse direction Y". Unless otherwise indicated, "inward in the transverse direction Y" and "outward in the transverse direction Y" include not only directions parallel to the transverse direction Y but also directions close to the transverse direction Y.

Reference is made to Fig. 3. In the plan view of the vehicle, the head tube 4 overlaps the vehicle center axis C. The right main frame 5R is located rightward of the left main frame 5L. The right main frame 5R is located more rightward than the vehicle center axis C. The left main frame 5L is located more leftward than the vehicle center axis C.

A space S is formed leftward of the right main frame 5R and rightward of the left main frame 5L. The space S will hereinafter be called the "internal space S". The internal space S is an area which, in the side view of the vehicle, overlaps the right main frame 5R and left main frame 5L.

The right main frame 5R includes an oblique portion 5Ra and a parallel portion 5Rb. The oblique portion 5Ra extends leftward and forward in the plan view of the vehicle. A front end of the oblique portion 5Ra is connected to the head tube 4. The parallel portion 5Rb extends substantially parallel to the longitudinal direction X in the plan view of the vehicle. The parallel portion 5Rb extends rearward from a rear end of the oblique portion 5Ra. Similarly, the left main frame 5L includes an oblique portion 5La and a parallel portion 5Lb.

Reference is made to Fig. 2. The right main frame 5R is relatively wide in the up-down direction Z. In other words, the right main frame 5R has a relatively a wide side. More particularly, the width of the right main frame 5R in the up-down direction Z is larger than the width of the right main frame 5R in the transverse direction Y. The left main frame 5L is also the same.

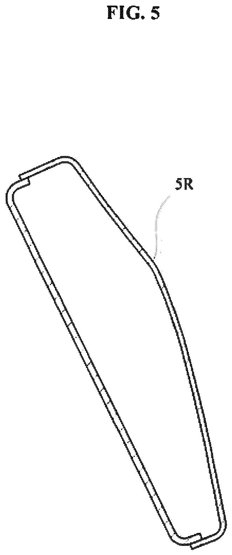

Fig. 5 is a sectional view of the right main frame 5R taken on line V-V of Fig. 2. The section of the right main frame 5R has an outer shape that is vertically long and approximately quadrangular or approximately pentagonal. The interior of the right main frame 5R is hollow. Similarly, the section of the left main frame 5L has an outer shape that is vertically long and approximately quadrangular or approximately pentagonal. Each of the right main frame 5R and left main frame 5L is what is called a box frame.

Reference is made to Figs. 2 - 4. The body frame 3 includes a cross member 6. The cross member 6 connects the right main frame 5R and left main frame 5L. The cross member 6 is disposed in the internal space S. The cross member 6 extends in the transverse direction Y (see Fig. 3). The cross member 6 has a right end thereof connected to the right main frame 5R. The cross member 6 has a left end thereof connected to the left main frame 5L.

Reference is made to Fig. 2. The body frame 3 includes a right seat frame 7R and a right back stay 8R. The right seat frame 7R and right back stay 8R are connected to the right main frame 5R, respectively. The right seat frame 7R and right back stay 8R extend rearward from the right main frame 5R, respectively. The right seat frame 7R is disposed above the right back stay 8R.

Reference is made to Figs. 3 and 4. The body frame 3 includes a left seat frame 7L and a left back stay. Figs. 3 and 4 omit illustration of the left back stay. The left seat frame 7L and left back stay are connected to the left main frame 5L, respectively. The left seat frame 7L and left back stay have the same constructions and shapes as the right seat frame 7R and right back stay 8R except for being bilaterally symmetric. The right seat frame 7R and left seat frame 7L support the seat 19.

An arrangement of the body frame 3 and engine 16 will be described. Reference is made to Fig. 2. The engine 16 is disposed more rearward than the head tube 4. Part of the engine 16 (specifically a lower portion of the engine 16) is, in the side view of the vehicle, located below the right main frame 5R and left main frame 5L. The other part of the engine 16 (specifically an upper portion of the engine 16), in the side view of the vehicle, overlaps the right main frame 5R and left main frame 5L. The whole of the engine 16 is, in the side view of the vehicle, located below an upper edge of the right main frame 5R and an upper edge of the left main frame 5L. Reference is made to Fig. 3. Part of the engine 16 is, in the plan view of the vehicle, located leftward of the right main frame 5R and rightward of the left main frame 5L. Part of the engine 16 overlaps the internal space S in the plan view of the vehicle. Part of the engine 16 is disposed below the internal space S.

An arrangement of the right main frame 5R, left main frame 5L, engine 16, and fuel tank 17 will be described. Reference is made to Fig. 2. The fuel tank 17 is, in the side view of the vehicle, disposed above the right main frame 5R and left main frame 5L. The fuel tank 17 is disposed above the engine 16 in the side view of the vehicle. Reference is made to Fig. 4. Part of the fuel tank 17 is, in the plan view of the vehicle, located leftward of the right main frame 5R and rightward of the left main frame 5L. Part of the fuel tank 17 overlaps the internal space S in the plan view of the vehicle. The fuel tank 17 is disposed above the internal space S. The fuel tank 17 overlaps the engine 16 in the plan view of the vehicle.

Reference is made to Fig. 2. The engine 16 is supported by the body frame 3. The engine 16 is supported through brackets 36, 37 and 38 connected to the body frame 3. Each of the brackets 36, 37 and 38 is coupled to the engine 16 by a fastening member 39. The fastening members 39 are bolts, for example. Consequently, the engine 16 is fixed to the body frame 3. The engine 16 is unrockable relative to the body frame 3.

Reference is made to Fig. 3. Two brackets 36 are fixed to the cross member 6. One bracket 37 and one bracket 38 are fixed to the right main frame 5R. Another bracket 37 and another bracket 38 are fixed to the left main frame 5L. In this way, the engine 16 is supported by the right main frame 5R, left main frame 5L, and cross member 6.

### 3. Details of the engine

Reference is made to Fig. 2. The engine 16 is a single-cylinder engine. The engine 16 is a water-cooled engine.

The engine 16 has a crankcase 41 and a cylinder unit 42. The crankcase 41 houses a crankshaft not shown. The cylinder unit 42 is connected to an upper part of the crankcase 41.

The cylinder unit 42 includes a cylinder body 43, a cylinder head 46, and a head cover 49. The cylinder body 43, cylinder head 46, and head cover 49 are connected in this order substantially upward. The cylinder body 43 has a lower part thereof connected to the crankcase 41.

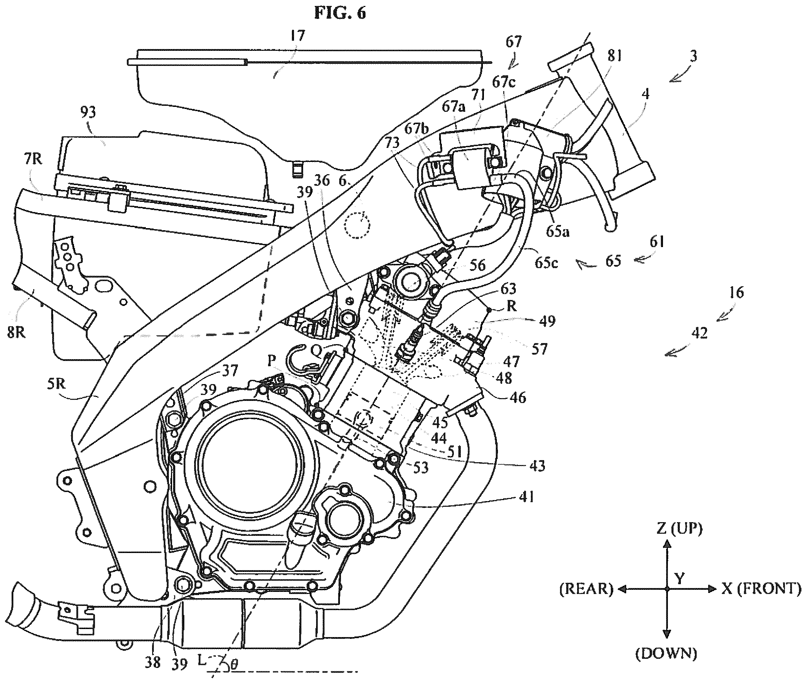

Fig. 6 is a right side view of a portion of the straddled vehicle. Fig. 6 shows the construction of parts inside the engine 16 in dotted lines. The cylinder body 43 has one cylinder bore 44 centering on a cylinder axis L. The cylinder bore 44 is formed inside the cylinder body 43. In a side view of the vehicle, the cylinder axis L extends forward and upward. The cylinder axis L and a horizontal line form therebetween an angle 0 in the side view of the vehicle, which is 45 degrees or larger. The cylinder body 43 has a piston 51 mounted in the cylinder bore 44. The piston 51 is connected to the crankshaft through a connecting rod 53. A lower surface of the cylinder head 46 can close an upper part of the cylinder bore 44. An inner circumferential surface of the cylinder body 43, an upper surface of the piston 51, and the lower surface of the cylinder head 46 define a combustion chamber 45. Thus, the cylinder unit 42 has the combustion chamber 45 in its interior.

The cylinder head 46 has an inlet port 47 and an exhaust port 48. The inlet port 47 supplies a fuel-air mixture to the combustion chamber 45. The exhaust port 48 discharges combustion gas in the combustion chamber 45. The inlet port 47 and exhaust port 48 are formed in the interior of the cylinder head 46. The inlet port 47 and exhaust port 48 communicate with the combustion chamber 45, respectively. The inlet port 47 is located behind the exhaust port 48 in the side view of the vehicle.

The cylinder unit 42 includes inlet valves 56 and exhaust valves 57. The inlet valves 56 open and close the inlet port 47. The exhaust valves 57 open and close the exhaust port 48. The inlet valves 56 are arranged behind the exhaust valves 57 in the side view of the vehicle.

Reference is made to Fig. 2. The cylinder unit 42 has a right portion 42R. The right portion 42R is a region, located rightward of the cylinder axis L, of a peripheral wall portion of the cylinder unit 42 extending circumferentially about the cylinder axis L. The right portion 42R is located more rightward than the vehicle center axis C. The right portion 42R of the cylinder unit 42 is an example of the side portion of the engine in this invention.

The right portion 42R of the cylinder unit 42 includes a right portion 43R of the cylinder body 43, a right portion 46R of the cylinder head 46, and a right portion 49R of the head cover 49. The right portion 43R of the cylinder body 43 is a region, located rightward of the cylinder axis L, of a peripheral wall portion of the cylinder body 43. The right portion 46R of the cylinder head 46 is a region, located rightward of the cylinder axis L, of a peripheral wall portion of the cylinder head 46. The right portion 49R of the head cover 49 is a region, located rightward of the cylinder axis L, of a peripheral wall portion of the head cover 49.

### 4. Ignition device

Reference is made to Figs. 2 and 6. The straddled vehicle 1 has an ignition device 61. The ignition device 61 has a spark plug 63, a plug cord 65, and an ignition coil 67. The spark plug 63 is shown in Fig. 6. The plug cord 65 is connected to the spark plug 63. The ignition coil 67 is connected to the plug cord 65. The ignition coil 67 generates a high voltage current. The plug cord 65 transmits the high voltage current generated by the ignition coil 67. The plug cord 65 supplies the high voltage current to the spark plug 63. The spark plug 63 ignites the fuel-air mixture in the combustion chamber 45.

### 4-1. Spark plug

Reference is made to Fig. 6. The spark plug 63 is attached to the engine 16. The spark plug 63 is attached to the right portion 42R of the cylinder unit 42. The spark plug 63 is attached to the right portion 46R of the cylinder head 46. The spark plug 63 is located more rightward than the vehicle center axis C.

The spark plug 63 is inserted to the interior of the cylinder head 46. The spark plug 63 has a distal end thereof located in the combustion chamber 45. A proximal end of the spark plug 63 is located outside the engine 16. The proximal end of the spark plug 63 is located rightward of the engine 16. The spark plug 63 overlaps the right portion 42R of the cylinder unit 42 in the side view of the vehicle. The proximal end of the spark plug 63 extends upward in the side view of the vehicle.

The spark plug 63 is, in the side view of the vehicle, located below the right main frame 5R and left main frame 5L. The spark plug 63 is not located in the internal space S. The spark plug 63 is located lower than the internal space S. The spark plug 63 overlaps the cylinder axis L in the side view of the vehicle.

### 4-2. Ignition coil 67

Reference is made to Figs. 2 and 3. The ignition coil 67 is supported by a bracket 71. The bracket 71 has a proximal end thereof connected to the right main frame 5R. The proximal end of the bracket 71 is connected to the oblique portion 5Ra. The bracket 71 projects rightward from the right main frame 5R. A distal end of the bracket 71 supports the ignition coil 67. The distal end of the bracket 71 further supports the side cover 20.

The ignition coil 67 has a body portion 67a, a primary terminal 67b, and a secondary terminal 67c. The primary terminal 67b is connected to the rear of the body portion 67a. The primary terminal 67b is electrically connected to primary wiring 73. The secondary terminal 67c is connected to the front of the body portion 67a. The secondary terminal 67c is electrically connected to the plug cord 65.

Reference is made to Fig. 3. The ignition coil 67 is located more rightward than the vehicle center axis C. The ignition coil 67 is located rightward of the right main frame 5R in the plan view of the vehicle. The whole of the ignition coil 67 is located rightward of the right main frame 5R in the plan view of the vehicle. The ignition coil 67 is located rightward of the oblique portion 5Ra of the right main frame 5R. The ignition coil 67 is not located in the internal space S.

Reference is made to Figs. 2 and 6. The ignition coil 67 overlaps the right main frame 5R in the side view of the vehicle. The ignition coil 67 is located higher than the spark plug 63 in the side view of the vehicle. The ignition coil 67 is located higher than the engine 16 in the side view of the vehicle.

The ignition coil 67 is located more forward than a rear end P of the cylinder unit 42. The rear end P of the cylinder unit 42 corresponds to a rear end of the cylinder body 43. The ignition coil 67 is located more forward than a rear end Q of the cylinder head 46. The ignition coil 67 is located more forward than the spark plug 63 in the side view of the vehicle.

The ignition coil 67 is located more rearward than the head tube 4 in the side view of the vehicle. The ignition coil 67 is located more rearward than a front end R of the engine 16 in the side view of the vehicle. The front end R of the engine 16, in the side view of the vehicle, corresponds to a front end of the cylinder unit 42 and corresponds to a front end of the head cover 49. The ignition coil 67 is located more rearward than the cylinder axis L in the side view of the vehicle.

### 4-3. Plug cord

Reference is made to Fig. 2. The plug cord 65 has a relatively large outside diameter. The plug cord 65 is relatively inflexible.

The plug cord 65 has a first end 65a, a second end 65b, and an intermediate portion 65c. The first end 65a is a portion electrically connected to the ignition coil 67. The second end 65b is a portion electrically connected to the spark plug 63. The second end 65b will hereinafter be called the "plug cap 65b". The intermediate portion 65c is a portion between the first end 65a and plug cap 65b. An arrangement of the plug cord 65 will be described hereinafter, as divided into the first end 65a, second end 65b, and intermediate portion 65c.

Reference is made to Fig. 2. The first end 65a is connected to the front of the ignition coil 67. The first end 65a extends forward from the ignition coil 67. The first end 65a extends substantially linearly. The first end 65a overlaps the right main frame 5R in the side view of the vehicle.

Reference is made to Fig. 3. The first end 65a is located more rightward than the vehicle center axis C. The first end 65a is located rightward of the right main frame 5R in the plan view of the vehicle. That is, the first end 65a is not located in the internal space S. A clearance between the first end 65a and right main frame 5R is secured. Of course, the first end 65a is not in contact with the left main frame 5L, either. A clearance between the first end 65a and left main frame 5L is fully secured.

The first end 65a is located rightward of the oblique portion 5Ra of the right main frame 5R. The first end 65a extends forward while the oblique portion 5Ra extends forward and leftward. Consequently, as the first end 65a extends further forward from the ignition coil 67, the first end 65a moves away from the main frame 5R.

An arrangement of the plug cap 65b will be described. Reference is made to Fig. 2. The plug cap 65b is put on the proximal end of the spark plug 63. The plug cap 65b extends upward from the spark plug 63 in the side view of the vehicle. The plug cap 65b extends substantially linearly in the side view of the vehicle.

The plug cap 65b is located lower than the first end 65a. The plug cap 65b is located more rearward than the first end 65a.

The plug cap 65b is located in substantially the same position as the proximal end of the spark plug 63. That is, the plug cap 65b is located below the right main frame 5R in the side view of the vehicle. The plug cap 65b is not located in the internal space S. The plug cap 65b is located lower than the internal space S. The plug cap 65b overlaps the cylinder axis L in the side view of the vehicle.

The plug cap 65b overlaps the right portion 42R of the cylinder unit 42 in the side view of the vehicle. The plug cap 65b, in the side view of the vehicle, overlaps the right portion 46R of the cylinder head 46, and the right portion 49R of the head cover 49.

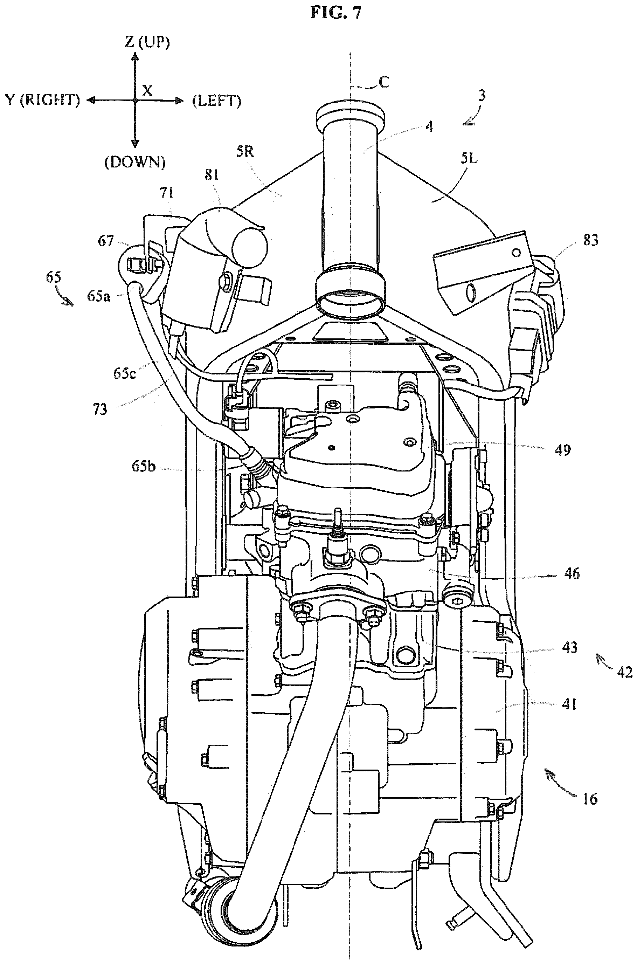

Fig. 7 is a front view of a portion of the straddled vehicle. The plug cap 65b extends upward in the front view of the vehicle. The plug cap 65b extends substantially linearly in the front view of the vehicle. The plug cap 65b is located more rightward than the vehicle center axis C. The plug cap 65b is located rightward of the engine 16. The plug cap 65b is located rightward of the cylinder unit 42. The plug cap 65b is located more leftward than the first end 65a. The plug cap 65b is located lower than the right main frame 5R in the front view of the vehicle.

The plug cap 65b is not in contact with the right main frame 5R. A clearance between the plug cap 65b and right main frame 5R is secured. Of course, the plug cap 65b is not in contact with the left main frame 5L, either. A clearance of the plug cap 65b and left main frame 5L is fully secured.

An arrangement of the intermediate portion 65c will be described. Reference is made to Fig. 2. In the side view of the vehicle, the intermediate portion 65c curves downward from the first end 65a. In the side view of the vehicle, the intermediate portion 65c subsequently curves rearward. Then, the intermediate portion 65c reaches the plug cap 65b.

The intermediate portion 65c as a whole curves substantially arcuately in the side view of the vehicle. In other words, the whole of the intermediate portion 65c curves to be substantially C-shaped in the side view of the vehicle. The radius of curvature of the intermediate portion 65c is relatively large in the side view of the vehicle. In the side view of the vehicle, the intermediate portion 65c has a pathway substantially approximated to an arc of a circle, the diameter of which corresponds to a line segment linking the first end 65a and plug cap 65b.

An upper part of the intermediate portion 65c overlaps the right main frame 5R in the side view of the vehicle. A lower part of the intermediate portion 65c is located below the right main frame 5R in the side view of the vehicle.

Reference is made to Fig. 7. The intermediate portion 65c extends downward and leftward from the first end 65a in the front view of the vehicle. The intermediate portion 65c extends substantially linearly in the front view of the vehicle. The intermediate portion 65c, in the front view of the vehicle, extends from a position rightward of the right main frame 5R to a position below the right main frame 5R. The intermediate portion 65c is not located in the internal space S. The intermediate portion 65c does not pass through the internal space S.

The intermediate portion 65c is not in contact with the right main frame 5R. A clearance between the intermediate portion 65c and right main frame 5R is secured. Of course, the intermediate portion 65c is not in contact with the left main frame 5L, either. A clearance between the intermediate portion 65c and left main frame 5L is fully secured.

Since the intermediate portion 65c extends substantially linearly in the front view of the vehicle, it can be said that the curvature of the intermediate portion 65c is not aimed at avoiding contact with the right main frame 5R. In other words, it can be said that the intermediate portion 65c does not need to curve in order to circumvent the right main frame 5R. Similarly, it can be said that the intermediate portion 65c does not need to curve in order to avoid contact with the left main frame 5L. The curvature of the intermediate portion 65c is merely for connecting the first end 65a and plug cap 65b.

As described above, the whole of the plug cord 65 is not located in the internal space S. The plug cord 65 is not in contact with the right main frame 5R or the left main frame 5L. A clearance between the plug cord 65 and right main frame 5R is secured. A clearance between the plug cord 65 and left main frame 5L is also secured.

The first end 65a and plug cap 65b of the plug cord 65 are not curved. The intermediate portion 65c of the plug cord 65 is curved with a relatively large radius of curvature. The intermediate portion 65c of the plug cord 65 is curved in order to connect the first end 65a and plug cap 65b. The intermediate portion 65c of the plug cord 65 does not need to be curved in order to avoid contact with the right main frame 5R and contact with the left main frame 5L.

The plug cord 65 is supported only by the spark plug 63 and ignition coil 67. That is, the plug cord 65 is not supported by any support members (e.g. clamp members) other than the spark plug 63 and ignition coil 67.

### 5. Vehicle components other than the ignition device

Reference is made to Fig. 3. The straddled vehicle 1 has a connector 81. The connector 81 attachably and detachably connects a plurality of electric wires. The connector 81 is also called a coupler.

The connector 81 is located rightward of the right main frame 5R in the plan view of the vehicle. The connector 81 is located rightward of the oblique portion 5Ra of the right main frame 5R in the plan view of the vehicle. The connector 81 is located leftward of the ignition coil 67 in the plan view of the vehicle. The connector 81 is located leftward of the plug cord 65 in the plan view of the vehicle. The connector 81 is located leftward of the first end 65a of the plug cord 65 in the plan view of the vehicle.

The connector 81 is located in a position away from forward of the ignition coil 67, and the plug cord 65 extends forward from the ignition coil 67. The plug cord 65 therefore does not need to be curved in order to avoid the connector 81. That is, the plug cord 65 can avoid contact with the connector 81 only if the plug cord 65 extends straight forward from the ignition coil 67.

Reference is made to Fig. 2. The connector 81 overlaps the right main frame 5R in the side view of the vehicle. The connector 81 overlaps part of the ignition coil 67 in the side view of the vehicle. The connector 81 overlaps part of the plug cord 65 in the side view of the vehicle. The connector 81 overlaps the whole of the first end 65a in the side view of the vehicle. The connector 81 overlaps part of the intermediate portion 65c in the side view of the vehicle. The parts of the plug cord 65 which overlap the main frame 5R in the side view of the vehicle will be called the "overlap parts of the plug cord 65". The connector 81 overlaps most of the overlap parts of the plug cord 65 in the side view of the vehicle.

The connector 81 is an example of the external vehicle component in this invention.

Reference is made to Fig. 3. The straddled vehicle 1 has a regulator 83. The regulator 83 regulates voltage. The regulator 83 is located leftward of the left main frame 5L in the plan view of the vehicle. Although not shown, the regulator 83 overlaps the left main frame 5L in the side view of the vehicle.

Reference is made to Fig. 3. The straddled vehicle 1 has a hydraulic unit 85. The hydraulic unit 85 regulates hydraulic pressure of the brakes. The hydraulic unit 85 regulates the hydraulic pressure of the front wheel brake 15 and the hydraulic pressure of the rear wheel brake 35. The hydraulic unit 85 is disposed leftward of the right main frame 5R and rightward of the left main frame 5L. The hydraulic unit 85 is located in the internal space S. The hydraulic unit 85 overlaps the vehicle center axis C in the plan view of the vehicle.

The straddled vehicle 1 has a plurality of (e.g. two) pipes 87. Each pipe 87 transmits the hydraulic pressure of the front wheel brake 15. Each pipe 87 is connected to the hydraulic unit 85. Each pipe 87 extends forward from the hydraulic unit 85. Part of each pipe 87 is located in the internal space S.

The straddled vehicle 1 has a plurality of (e.g. two) pipes 89. Each pipe 89 transmits the hydraulic pressure of the rear wheel brake 35. Each pipe 89 is connected to the hydraulic unit 85. Each pipe 89 extends rearward from the hydraulic unit 85. Part of each pipe 89 is located in the internal space S.

The straddled vehicle 1 has a signal line (not shown) connected to the hydraulic unit 85. The signal line is an electric wire which transmits signals relating to wheel speed of at least one of the front wheel 14 and rear wheel 34, for example.

The straddled vehicle 1 has a harness 91. The harness 91 is a bundle of a plurality of electric wires. The harness 91 includes the primary wiring 73 described hereinbefore. The primary wiring 73 branches from the harness 91 and extends to the ignition coil 67. The harness 91 is disposed in the internal space S. The harness 91 extends in the longitudinal direction X. The harness 91 is located more leftward than the vehicle center axis C in the plan view of the vehicle. The harness 91 is located adjacent the left main frame 5L in the plan view of the vehicle.

Reference is made to Fig. 2. The straddled vehicle 1 has an air cleaner 93. The air cleaner 93 removes foreign substances in the air to clean the air. The air cleaner 93 is connected for communication with the inlet port 47 described hereinbefore. Part of the air cleaner 93 overlaps the right main frame 5R and left main frame 5L in the side view of the vehicle. The other part of the air cleaner 93 is located above the right main frame 5R and left main frame 5L in the side view of the vehicle.

Reference is made to Fig. 4. The air cleaner 93 is disposed leftward of the right main frame 5R and rightward of the left main frame 5L in the plan view of the vehicle. Part of the air cleaner 93 is located in the internal space S.

The above connector 81, regulator 83, hydraulic unit 85, pipes 87 and 89, harness 91, and air cleaner 93 are vehicle components, respectively. The vehicle components arranged in the internal space S are specially called "internal vehicle components". The hydraulic unit 85, pipes 87 and 89, harness 91, and air cleaner 93 are internal vehicle components.

### 6. Side cover

Reference is made to Fig. 1. The side cover 20 includes a right cover 20R. The right cover 20R is located rightward of the right main frame 5R. The right cover 20R is located rightward of the ignition coil 67. The right cover 20R overlaps the ignition coil 67 in the side view of the vehicle. The right cover 20R covers a right side of the ignition coil 67. The ignition coil 67 is invisible in the side view of the vehicle.

The right cover 20R is located rightward of the plug cord 65. In the side view of the vehicle, the right cover 20R overlaps part of the plug cord 65. The right cover 20R covers a right side of the part of the plug cord 65. The part of the plug cord 65 is invisible in the side view of the vehicle. The right cover 20R has an opening A. The opening A has a shape elongated in the longitudinal direction X. The other part of the plug cord 65 can be seen through the opening A in the side view of the vehicle.

The right cover 20R is located rightward of the engine 16. The right cover 20R overlaps part of the engine 16 in the side view of the vehicle. The right cover 20R covers a right side of part of the engine 16. The part of the engine 16 is invisible in the side view of the vehicle.

Reference is made to Fig. 4. The right cover 20R is located above the ignition coil 67. The right cover 20R overlaps the ignition coil 67 in the plan view of the vehicle. The right cover 20R overlaps the whole of the ignition coil 67 in the plan view of the vehicle. The right cover 20R covers an area above the ignition coil 67. The ignition coil 67 is invisible in the plan view of the vehicle.

The right cover 20R is located above the connector 81. The right cover 20R overlaps part of the connector 81 in the plan view of the vehicle. The right cover 20R covers an area above part of the connector 81. The part of the connector 81 is invisible in the plan view of the vehicle.

Although the connector 81 is not shown in Fig. 1, the right cover 20R is located rightward of the connector 81. The right cover 20R overlaps the connector 81 in the side view of the vehicle. The right cover 20R covers a right side of the connector 81. The connector 81 is invisible in the side view of the vehicle.

Reference is made to Fig. 4. The side cover 20 has a left cover 20L. The left cover 20L has the same construction and shape as the right cover 20R except for being bilaterally symmetric.

The left cover 20L is located above the regulator 83. The left cover 20L overlaps the regulator 83 in the plan view of the vehicle. The left cover 20L covers an area above the regulator 83. The regulator 83 is invisible in the plan view of the vehicle.

Although not shown, the left cover 20L is located also leftward of the regulator 83. The left cover 20L overlaps the regulator 83 in the side view of the vehicle. The left cover 20L covers a left side of the regulator 83. The regulator 83 is invisible in the side view of the vehicle.

Reference is made to Figs. 1 and 4. The right cover 20R includes a first right member 21R, a second right member 22R, and a third right member 23R. The right cover 20R is an assembly formed by connecting together the first right member 21R, second right member 22R, and third right member 23R. The first right member 21R, second right member 22R, and third right member 23R are separable from one another.

Reference is made to Fig. 4. The left cover 20L includes a first left member 21L, a second left member 22L, and a third left member 23L. The first left member 21L, second left member 22L, and third left member 23L have the same constructions and shapes as the first right member 21R, second right member 22R, and third right member 23R, except for being bilaterally symmetric.

### 4. Advantageous effects

According to this embodiment, the ignition coil 67 is located rightward of the right main frame 5R. That is, the ignition coil 67 is not located in the internal space S. It is therefore possible to arrange easily a plurality of vehicle components (specifically, the hydraulic unit 85, pipes 87 and 89, harness 91, and air cleaner 93) in the internal space S.

When the straddled vehicle 1 has the hydraulic unit 85, it is necessary to secure not only an installation space for the hydraulic unit 85 but an installation space for the plurality of pipes 87 and 89 connected to the hydraulic unit 85. According to this embodiment, each installation space for the hydraulic unit 85 and pipes 87 and 89 is easily securable in the internal space S. This embodiment therefore demonstrates especially high utility when the internal vehicle components include the hydraulic unit 85.

The regulator 83 is located leftward of the left main frame 5L. That is, the regulator 83 is not located in the internal space S. It is therefore possible to arrange with increased ease the plurality of vehicle components in the internal space S.

A space rightward of the right main frame 5R is not so densely filled with vehicle components as the internal space S. The ignition coil 67 can therefore be accommodated easily.

A space leftward of the left main frame 5L is not so densely filled with vehicle components as the internal space S. The regulator 83 can therefore be accommodated easily.

The ignition coil 67 is not located in the internal space S. This can reduce the necessity to place the plug cord 65 near the internal vehicle components. This can reduce the necessity to curve the plug cord 65 in order to circumvent the internal vehicle components. The plug cord 65 can therefore be routed easily. In this embodiment, as noted above, there is no need to place the plug cord 65 near the internal vehicle components. The plug cord 65 therefore need not be curved in order to circumvent the internal vehicle components. Thus, the plug cord 65 can be routed very easily.

The ignition coil 67 is located rightward of the right main frame 5R in the plan view of the vehicle. The plug cord 65 is therefore located in a position sufficiently distant from the left main frame 5L. Consequently, the plug cord 65 need not be curved in order to avoid contact with the left main frame 5L. Thus, the plug cord 65 can be routed with increased ease.

The ignition coil 67 is located rightward of the oblique portion 5Ra of the right main frame 5R. It is therefore possible to secure an installation space conveniently for the plug cord 65 in front of the ignition coil 67. Thus, the plug cord 65 can be routed with increased ease.

The ignition coil 67 overlaps the right main frame 5R in the side view of the vehicle. That is, the ignition coil 67 is located in substantially the same height position as the right main frame 5R. The ignition coil 67 can therefore be attached easily to the right main frame 5R.

Especially since the right main frame 5R has a sectional outer shape that is vertically long and approximately quadrangular or approximately pentagonal, the right main frame 5R has a relatively a wide side. Thus, the ignition coil 67 can be attached to the right main frame 5R with increased ease.

The spark plug 63 is attached to the cylinder unit 42, and the ignition coil 67 is located more forward than the rear end P of the cylinder unit 42. This can provide a relatively short linear distance between the ignition coil 67 and spark plug 63. The plug cord 65 can therefore be reduced in length. Consequently, the plug cord 65 can be routed all the more easily. Further, since the length of the plug cord 65 can be reduced, voltage drop in the plug cord 65 can be inhibited. This can conveniently prevent the voltage applied to the spark plug 63 from becoming less than the voltage required by the spark plug 63. As a result, the spark plug 63 can reliably ignite the fuel-air mixture in the combustion chamber 45. Thus, the performance of the ignition device 61 can be maintained conveniently.

The ignition coil 67 is located more forward than the rear end Q of the cylinder head 46. This can further shorten the distance between the ignition coil 67 and spark plug 63, and can further reduce the length of the plug cord 65.

The ignition coil 67 is located more rearward than the head tube 4. This can further shorten the distance between the ignition coil 67 and spark plug 63, and further reduce the length of the plug cord 65.

The ignition coil 67 is located more rearward than the front end R of the engine 16. This can further shorten the distance between the ignition coil 67 and spark plug 63, and further reduce the length of the plug cord 65.

The ignition coil 67 is located more rearward than the cylinder axis L. This can further shorten the distance between the ignition coil 67 and spark plug 63, and further reduce the length of the plug cord 65.

In the plan view of the vehicle, both the ignition coil 67 and spark plug 63 are arranged more rightward than the vehicle center axis C. The distance between the ignition coil 67 and spark plug 63 can therefore be made relatively short. This can reduce the length of the plug cord 65. Consequently, the plug cord 65 can be routed all the more easily. Further, voltage drop in the plug cord 65 can be inhibited.

The spark plug 63 is attached to the right portion 42R of the cylinder unit 42. The distance between the ignition coil 67 and spark plug 63 can therefore be made relatively short. This can reduce the length of the plug cord 65. Consequently, the plug cord 65 can be routed all the more easily. Further, voltage drop in the plug cord 65 can be inhibited.

The spark plug 63 is attached to the right portion 42R of the cylinder unit 42. With this construction, compared with the case of the spark plug 63 being attached to an upper part of the engine 16, it is possible to further reduce the necessity to place the plug cord 65 near the internal vehicle components. Thus, the plug cord 65 can be routed all the more easily.

The spark plug 63 is located below the right main frame 5R and left main frame 5L in the side view of the vehicle. That is, the spark plug 63 is located in a position lower than the internal space S. This can further reduce the necessity to place the plug cord 65 near the internal vehicle components. Thus, the plug cord 65 can be routed all the more easily.

When the internal vehicle components include the hydraulic unit 85, not only the hydraulic unit 85 but the pipes 87 and 89 are arranged in the internal space S. The internal vehicle components are therefore often arranged densely in the internal space S. The more densely the internal vehicle components are arranged in the internal space S, the greater technical significance is given to reduction of the necessity to place the plug cord 65 near the internal vehicle components. Thus, when the internal vehicle components include the hydraulic unit 85, this embodiment demonstrates especially high utility.

The spark plug 63 is located below the right main frame 5R and left main frame 5L in the side view of the vehicle. This can reduce the necessity to curve the plug cord 65 in order to avoid contact with the right main frame 5R. Thus, the plug cord 65 can be routed all the more easily.

Since the right main frame 5R and left main frame 5L have a sectional outer shape that is vertically long and approximately quadrangular or approximately pentagonal, the right main frame 5R and left main frame 5L have a relatively a large surface area. Consequently, when the right main frame 5R and left main frame 5L have such a construction, this embodiment demonstrates especially high utility in that the plug cord 65 can be routed easily, while avoiding contact with the right main frame 5R and contact with the left main frame 5L.

The plug cord 65 is not located in the internal space S. This can further reduce the necessity to place the plug cord 65 near the internal vehicle components. Thus, the plug cord 65 can be routed all the more easily.

The plug cord 65 is located rightward of the right main frame 5R and below the right main frame 5R. The space rightward of the right main frame 5R and a space below the right main frame 5R are not so densely filled with the vehicle components as the internal space S. This can effectively reduce the necessity to curve the plug cord 65. Thus, the plug cord 65 can be routed easily.

In this embodiment, the plug cord 65 is curved only in order to connect the ignition coil 67 and spark plug 63. Specifically, the plug cord 65 does not need to be curved in order to avoid the internal vehicle components, right main frame 5R, left main frame 5L, and connector 81. Thus, the plug cord 65 can be routed very easily.

The plug cord 65 is curved with a relatively large radius of curvature. Thus, the plug cord 65 can be routed easily.

The first end 65a of the plug cord 65 is located rightward of the oblique portion 5Ra of the right main frame 5R. The first end 65a extends straight forward, while the oblique portion 5Ra extends forward and leftward. Consequently, the further forward the first end 65a extends from the ignition coil 67, the larger becomes the clearance between the first end 65a and right main frame 5R. Thus, since it is not necessary to curve the plug cord 65 in order to avoid contact with the right main frame 5R, the pathway of the plug cord 65 can be simplified.

The plug cord 65 is supported only by the ignition coil 67 and spark plug 63. That is, the straddled vehicle 1 does not have a support member (e.g. a clamp member) exclusively for supporting the plug cord 65. The plug cord 65 therefore never receives stress from a support member. Further, the plug cord 65 is never corrected by a support member. It can be said from a different viewpoint that the plug cord 65 has a curved portion with a radius of curvature large enough to enable the plug cord 65 itself to maintain the curved shape of the plug cord 65 without using a support member. Thus, the plug cord 65 can be routed all the more appropriately. Further, the number of components relating to the ignition device 61 can be reduced, and the construction of the straddled vehicle 1 can be simplified.

The plug cord 65 is connected to the front of the ignition coil 67. With this construction, compared with the case of the plug cord 65 being connected to an upper part of the ignition coil 67, it is possible to prevent foreign substances from accumulating in the connection between the plug cord 65 and ignition coil 67. The connection between the plug cord 65 and ignition coil 67 can therefore be conveniently protected from foreign substances. The foreign substances are water and sand, for example.

The secondary terminal 67c of the ignition coil 67 is located at the front of the ignition coil 67. That is, the secondary terminal 67c of the ignition coil 67 is not located on an upper part of the ignition coil 67. The connection between the ignition coil 67 and plug cord 65 can conveniently be protected from foreign substances.

The primary wiring 73 is connected to the rear of the ignition coil 67. That is, the primary wiring 73 is not connected to the upper part of the ignition coil 67. The connection between the primary wiring 73 and ignition coil 67 can therefore be conveniently protected from foreign substances.

The primary terminal 67b of the ignition coil 67 is located at the rear of the ignition coil 67. That is, the primary terminal 67b of the ignition coil 67 is not located on an upper part of the ignition coil 67. The connection between the ignition coil 67 and primary wiring 73 can therefore be conveniently protected from foreign substances.

Since the internal space S is located above the engine 16, the heat tends to be stored in the internal space S. In other words, the internal space S is easily subjected to high temperature. Since the ignition coil 67 is not located in such internal space S, the ignition coil 67 can conveniently be prevented from being exposed to high temperature. That is, the ignition coil 67 cannot easily be affected by heat. It is therefore easy to maintain an excellent performance of the ignition coil 67. For example, it can conveniently prevent lowering of the voltage generated by the ignition coil 67.

The fuel tank 17 is located above the internal space S. Consequently, air currents occurring at the time of traveling flow through the internal space S less easily. Heat can therefore all the more easily be stored in the internal space S. The internal space S is subjected to high temperature all the more easily. Thus, when the fuel tank 17 is located above the internal space S, this embodiment which can inhibit the thermal effect on the ignition coil 67 demonstrates especially high utility.

Since the right main frame 5R and left main frame 5L have a sectional outer shape that is vertically long and approximately quadrangular or approximately pentagonal, the heat is stored in the internal space S all the more easily. Consequently, when the right main frame 5R and left main frame 5L have such a construction, this embodiment which can inhibit the thermal effect on the ignition coil 67 demonstrates especially high utility.

The heat can be stored less easily in the space rightward of the right main frame 5R than in the internal space S. The space rightward of the right main frame 5R is less subjected to high temperature than the internal space S. Since the ignition coil 67 is located rightward of the right main frame 5R, the thermal effect on the ignition coil 67 can be further inhibited.

The ignition coil 67 is located in substantially the same height position as the right main frame 5R. The position of the ignition coil 67 is therefore not excessively close to the engine 16. This can conveniently inhibit the ignition coil 67 undergoing the influence of the heat from the engine 16.

The engine 16 is a single-cylinder engine. Therefore, the number of spark plugs 63 is one, and the number of plug cords 65 is also one. Thus, an installation space for the plug cord 65 can be secured easily, and the plug cord 65 can be routed with increased ease.

The right cover 20R overlaps the ignition coil 67 in the side view of the vehicle. The ignition coil 67 is therefore not visible in the side view of the vehicle. This can conveniently prevent spoiling of the outward appearance of the straddled vehicle 1. Further, the right cover 20R can conveniently protect the ignition coil 67.

The right cover 20R overlaps the ignition coil 67 in the plan view of the vehicle. The ignition coil 67 is therefore not visible in the plan view of the vehicle. This can conveniently prevent spoiling of the outward appearance of the straddled vehicle 1. Further, the right cover 20R can conveniently protect the ignition coil 67.

The connector 81 is located rightward of the right main frame 5R and leftward of the plug cord 65. The connector 81 overlaps at least part of the plug cord 65 in the side view of the vehicle. Since the connector 81 is thus located between the right main frame 5R and plug cord 65, even if the plug cord 65 should bend, the connector 81 could conveniently prevent the plug cord 65 from contacting the right main frame 5R. Thus, the performance of the ignition device 61 can be maintained conveniently.

Since the connector 81 overlaps most of the overlap parts of the plug cord 65 in the side view of the vehicle, it can reliably prevent the plug cord 65 from contacting the right main frame 5R.

Since the connector 81 overlaps the whole of the first end 65a in the side view of the vehicle, it can reliably prevent the first end 65a from contacting the right main frame 5R.

The bracket 71 is connected to the right main frame 5R, and supports the ignition coil 67. The ignition coil 67 can therefore conveniently be attached to the right main frame 5R.

The bracket 71 further supports the side cover 20. The components relating to the side cover 20 can therefore be reduced, and the construction of the straddled vehicle 1 can be simplified.

The hydraulic unit 85 and ignition coil 67 are separated by the right main frame 5R. This can conveniently inhibit the signal line connected to the hydraulic unit 85 from undergoing the electromagnetic influence of the ignition coil 67. Thus, the performance of the hydraulic unit 85 can be maintained conveniently.

The harness 91 and ignition coil 67 are separated by the right main frame 5R. This can conveniently inhibit the signal line included in the harness 91 from undergoing the electromagnetic influence of the ignition coil 67.

The ignition coil 67 is located rightward of the right main frame 5R, and the harness 91 is located more leftward than the vehicle center axis C. The clearance between the harness 91 and ignition coil 67 can therefore be further enlarged. This can all the more conveniently inhibit the signal line included in the harness 91 from undergoing the electromagnetic influence of the ignition coil 67.

The regulator 83 is not located in the internal space S. The regulator 83 can therefore radiate the heat conveniently. Thus, the performance of the regulator 83 can be maintained conveniently.

Since the right main frame 5R and left main frame 5L have a sectional outer shape that is vertically long and approximately quadrangular or approximately pentagonal, the heat is stored in the internal space S all the more easily. Consequently, when the right main frame 5R and left main frame 5L have such a construction, this embodiment which enables the regulator 83 to radiate the heat conveniently has especially high utility.

The regulator 83 is located leftward of the left main frame 5L. The heat can be stored less easily in the space leftward of the left main frame 5L than in the internal space S. Since the regulator 83 is located leftward of the left main frame 5L, the regulator 83 can radiate the heat all the more conveniently.

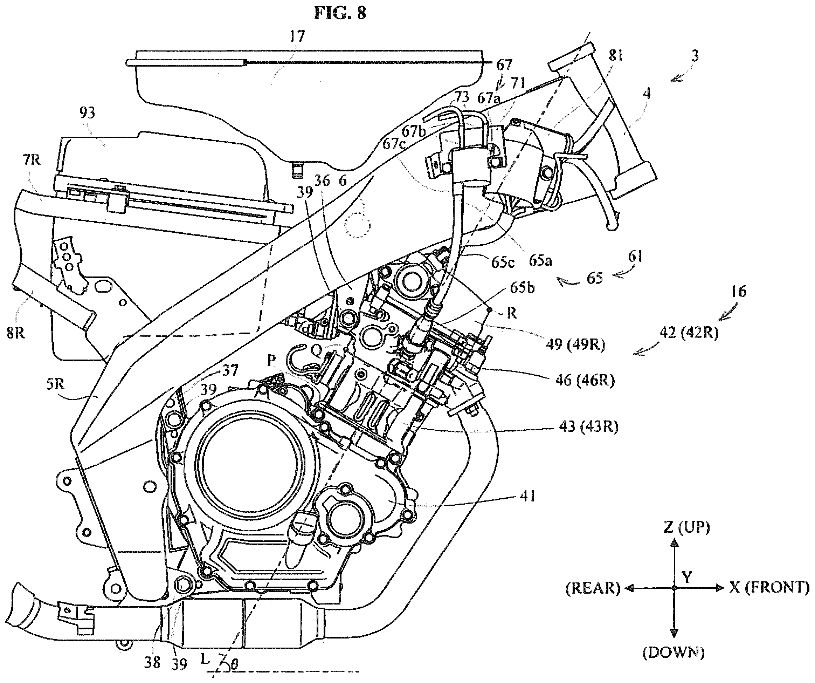

This invention is not limited to the foregoing embodiment, but may be modified as follows:
(1) In the foregoing embodiment, the ignition coil 67 is located rightward of the right main frame 5R. The invention is not limited to this. For example, the ignition coil 67 may be located leftward of the left main frame 5L. With this modified embodiment, the vehicle components can easily be arranged in the internal space S, and the plug cord 65 can be routed easily.
(2) In the foregoing embodiment, the whole of the ignition coil 67 overlaps the right main frame 5R in the side view of the vehicle. The invention is not limited to this. For example, part of the ignition coil 67 may overlap the right main frame 5R in the side view of the vehicle, and the ignition coil 67 may be located rightward of the right main frame 5R in the plan view of the vehicle. For example, part of the ignition coil 67 may be located at least either above the right main frame 5R or below the right main frame 5R in the side view of the vehicle, and may be located rightward of the right main frame 5R in the plan view of the vehicle. In these modified embodiments also, since the ignition coil 67 is located rightward of the right main frame 5R in the plan view of the vehicle, the internal vehicle components can easily be arranged in the internal space S, and the plug cord 65 can be routed easily.
   In the foregoing embodiment, the ignition coil 67 overlaps the right main frame 5R in the side view of the vehicle. The invention is not limited to this. The ignition coil 67 may overlap at least either the right main frame 5R or the left main frame 5L in the side view of the vehicle.
(3) In the foregoing embodiment, the plug cord 65 is not located in the internal space S. The invention is not limited to this. For example, part of the plug cord 65 may be located in the internal space S. In this modified embodiment also, since the ignition coil 67 is located rightward of the right main frame 5R in the plan view of the vehicle, the portion of the plug cord 65 passing through adjacent the internal vehicle components can be shortened. This can reduce the necessity to curve the plug cord 65 in order to circumvent the internal vehicle components.
(4) In the foregoing embodiment, both the ignition coil 67 and spark plug 63 are arranged more rightward than the vehicle center axis C. The invention is not limited to this. For example, both the ignition coil 67 and spark plug 63 may be arranged more leftward than the vehicle center axis C. Alternatively, the ignition coil 67 may be located on one of the position more rightward than the vehicle center axis C and the position more leftward than the vehicle center axis C, and the spark plug 63 on the other of the position more rightward than the vehicle center axis C and the position more leftward than the vehicle center axis C.
(5) In the foregoing embodiment, the spark plug 63 is located on the right portion 42R of the cylinder unit 42. The invention is not limited to this. The position of the spark plug 63 relative to the engine 16 may be changed as appropriate. For example, the spark plug 63 may be located on a left portion of the cylinder unit 42. The left portion of the cylinder unit 42 is a region, located leftward of the cylinder axis L, of the peripheral wall portion of the cylinder unit 42. In this modified embodiment, the left portion of cylinder unit 42 is an example of the side portion of the engine in this invention.
   Alternatively, the spark plug 63 may be located on an upper portion of the engine 16.
(6) In the foregoing embodiment, the arrangement of the spark plug 63 has been described in detail. The invention is not limited to this. The arrangement of the spark plug 63 may be changed as appropriate. For example, at least part of the spark plug 63 may overlap the right main frame 5R and left main frame 5L in the side view of the vehicle. For example, at least part of the spark plug 63 may be located in the internal space S. For example, the spark plug 63 may not overlap the cylinder axis L in the side view of the vehicle. The spark plug 63 may be located more forward than the cylinder axis L in the side view of the vehicle. The spark plug 63 may be located more rearward than the cylinder axis L in the side view of the vehicle.
(7) In the foregoing embodiment, the arrangement of the ignition coil 67 has been described in detail. The invention is not limited to this. The arrangement of the ignition coil 67 may be changed as appropriate.
   For example, the ignition coil 67 may be located more rearward than the rear end P of the cylinder unit 42. For example, the ignition coil 67 may overlap the cylinder axis L in the side view of the vehicle. For example, the ignition coil 67 may be located more forward than the cylinder axis L in the side view of the vehicle. For example, part of the ignition coil 67 may be located more rearward than the front end R of the engine 16 in the side view of the vehicle. For example, at least part of the ignition coil 67 may be located more forward than the front end R of the engine 16 in the side view of the vehicle.
(8) In the foregoing embodiment, the plug cord 65 is connected to the front of ignition coil 67. The invention is not limited to this. That is, the plug cord 65 may be connected to a portion other than the front of the ignition coil 67. In the foregoing embodiment, the secondary terminal 67c of the ignition coil 67 is connected to the front of the body portion 67a. The invention is not limited to this. That is, the secondary terminal 67c may be connected to a part other than the front of the body portions 67a. In the foregoing embodiment, the primary wiring 73 is connected to the rear of the ignition coil 67. The invention is not limited to this. That is, the primary wiring 73 may be connected to a part other than the rear of the ignition coil 67. In the foregoing embodiment, the primary terminal 67b of the ignition coil 67 is connected to the rear of the body portion 67a. The invention is not limited to this. That is, the primary terminal 67b may be connected to a part other than the rear of the body portions 67a.
   Reference is made to Fig. 8. Fig. 8 is a right side view of a portion of a straddled vehicle according to a modified embodiment. Components identical to those of the embodiment are shown with the same signs, and will not particularly be described.
   The primary terminal 67b of the ignition coil 67 is connected to an upper part of the body portion 67a. The secondary terminal 67c of the ignition coil 67 is connected to a lower part of the body portion 67a.
   The primary wiring 73 is connected to the primary terminal 67b. The primary wiring 73 is connected to the upper part of the ignition coil 67. The primary wiring 73 extends upward from the ignition coil 67.
   The plug cord 65 is connected to the secondary terminal 67c. The plug cord 65 is connected to the lower part of the ignition coil 67. The plug cord 65 extends from the ignition coil 67 toward the spark plug 63. The plug cord 65 extends downward from the ignition coil 67.
   The first end 65a of the plug cord 65 extends downward from the ignition coil 67 in the side view of the vehicle. The first end 65a extends linearly. The intermediate portion 65c of the plug cord 65 extends downward from first end 65a in the side view of the vehicle. The intermediate portion 65c of the plug cord 65 curves very gently in the side view of the vehicle. The plug cord 65 curves with a very large radius of curvature in the side view of the vehicle.
   According to this modified embodiment, since the plug cord 65 is connected to the lower part of the ignition coil 67, the pathway of the plug cord 65 linking the ignition coil 67 and spark plug 63 can be further simplified. The plug cord 65 can therefore be routed all the more easily.
   Since the first end 65a extends downward from the ignition coil 67, the pathway of the plug cord 65 can be further simplified. The plug cord 65 can therefore be routed all the more easily.
   Since the plug cord 65 curves very gently, the pathway of the plug cord 65 can be further simplified. The plug cord 65 can therefore be routed all the more easily.
   Since the plug cord 65 extends from the ignition coil 67 toward the spark plug 63, the length of the plug cord 65 can be further reduced. Consequently, the plug cord 65 can be routed all the more easily. Further, voltage drop in the plug cord 65 can be further inhibited.
   In this modified embodiment, the primary wiring 73 connects to the upper part of the ignition coil 67. However, the right cover 20R covers an area above the connection between the primary wiring 73 and ignition coil 67. Consequently, this modified embodiment can also conveniently protect the connection between the primary wiring 73 and ignition coil 67 from foreign substances.
(9) In the foregoing embodiment, the plug cord 65 is supported only by the ignition coil 67 and spark plug 63. The invention is not limited to this. For example, the plug cord 65 may be supported by a support member (e.g. a clamp member).
(10) In the foregoing embodiment, the hydraulic unit 85 regulates the hydraulic pressure of the front wheel brake 15 and the hydraulic pressure of the rear wheel brake 35. The invention is not limited to this. For example, the hydraulic unit 85 may regulate only one of the hydraulic pressure of the front wheel brake 15 and the hydraulic pressure of the rear wheel brake 35.
(11) In the foregoing embodiment, the internal vehicle components include the hydraulic unit 85, pipes 87 and 89, harness 91, and air cleaner 93. The invention is not limited to this. For example, the internal vehicle components may not include at least one of the hydraulic unit 85, pipes 87 and 89, harness 91, and air cleaner 93. For example, the internal vehicle components may also include vehicle components other than the hydraulic unit 85, pipes 87 and 89, harness 91, and air cleaner 93. For example, the internal vehicle components may also include a starter motor and the like.
(12) In the foregoing embodiment, the right cover 20R overlaps the whole of the ignition coil 67 in the side view of the vehicle. The invention is not limited to this. For example, the right cover 20R may overlap part of the ignition coil 67 in the side view of the vehicle. For example, the right cover 20R may not overlap the ignition coil 67 in the side view of the vehicle.
(13) In the foregoing embodiment, the side cover 20 overlaps part of right main frame 5R and part of the left main frame 5L in the side view of the vehicle. The invention is not limited to this. For example, the side cover 20 may overlap the whole of the right main frame 5R and the whole of the left main frames 5L. For example, the side cover 20 may not overlap the right main frame 5R or the left main frame 5L in the side view of the vehicle.
(14) In the foregoing embodiment, the right cover 20R is formed of three members 21R, 22R and 23R. The invention is not limited to this. The right cover 20R may be formed of two, four or more members. Or the right cover 20R may be formed of a single member. The left cover 20L may also be varied likewise.
(15) The foregoing embodiment illustrates the construction of the body frame 3 in detail. The invention is not limited to this. The construction of the body frame 3 may be changed as appropriate.
   For example, the body frame 3 may further include the following right down frame and left down frame. The right down frame and left down frame are connected to the head tube 4, respectively. The right down frame and left down frame extend rearward and downward from the head tube 4, respectively. The right down frame is disposed below the right main frame 5R. The left down frame is disposed below the left main frame 5L. In this modified embodiment, the right down frame and left down frame may support the engine 16.
   Alternatively, the body frame 3 may further include the following right down frame and left down frame. The right down frame is connected to the right main frame 5R. The right down frame extends downward from the right main frame 5R. The left down frame is connected to the left main frame 5L. The left down frame extends downward from the left main frame 5L. In this modified embodiment, the right down frame and left down frame may support the engine 16.
(16) In the foregoing embodiment, the right main frame 5R and left main frame 5L have a sectional outer shape that is vertically long and approximately quadrangular or approximately pentagonal, respectively. The invention is not limited to this. For example, the sectional outer shape of the right main frame 5R and left main frame 5L may be changed to a vertically long, approximate polygon. Or the sectional outer shape of the right main frame 5R and left main frame 5L may be changed to approximately circular. That is, the right main frame 5R and left main frame 5L may be changed to what is called pipe frames.
(17) The foregoing embodiment illustrates the arrangement of the engine 16 in detail. The invention is not limited to this. The arrangement of the engine 16 may be changed as appropriate. For example, the whole of the engine 16 may be disposed below the right main frame 5R and left main frame 5L in the side view of the vehicle. For example, the whole of the engine 16 may be located in a position lower than the internal space S. For example, the whole of the engine 16 may be located leftward of the right main frame 5R and rightward of the left main frame 5L in the plan view of the vehicle.
(18) The foregoing embodiment illustrates the arrangement of the fuel tank 17 in detail. The invention is not limited to this. The arrangement of the fuel tank 17 may be changed as appropriate. For example, part of the fuel tank 17 may overlap the right main frame 5R and left main frame 5L in the side view of the vehicle. For example, part of the fuel tank 17 may be located below the right main frame 5R and left main frame 5L in the side view of the vehicle. For example, part of the fuel tank 17 may be located in the internal space S.
(19) In the foregoing embodiment, the engine 16 is a single-cylinder engine. The invention is not limited to this. The engine 16 may be a multicylinder engine. In the foregoing embodiment, the number of spark plugs 63 is one. The invention is not limited to this. The number of spark plugs 63 may be plural. In the foregoing embodiment, the number of plug cords 65 is one. The invention is not limited to this. The number of plug cords 65 may be plural. In the foregoing embodiment, the number of ignition coils 67 is one. The invention is not limited to this. The number of ignition coils 67 may be plural.
   For example, regarding the ignition coil 67 described in the forgoing embodiment as the "first ignition coil 67", the straddled vehicle 1 may further include a second ignition coil. The second ignition coil may be located either rightward of the right main frame 5R or leftward of the left main frame 5L in the plan view of the vehicle. For example, the first ignition coil 67 may be located rightward of the right main frame 5R in the plan view of the vehicle, and the second ignition coil leftward of the left main frame 5L in the plan view of the vehicle. Or the first ignition coil 67 and second ignition coil may both be located rightward of the right main frame 5R in the plan view of the vehicle.
(20) In the foregoing embodiment, the clearance between the plug cord 65 and right main frame 5R and the clearance between the plug cord 65 and left main frame 5L are secured in order to inhibit voltage drop in the plug cord 65. The invention is not limited to this. For example, the plug cord 65 and right main frame 5R may be in indirect contact with each other through an insulator. Similarly, the plug cord 65 and left main frame 5L may be in indirect contact with each other through an insulator. Alternatively, when permitted by required specifications of the engine 16 (when the ignition device 61 demonstrates a performance satisfying required specifications of the engine 16 in the state of the plug cord 65 being in contact with the main frame 5R/5L), the plug cord 65 may be in contact with at least one of the right main frame 5R and left main frame 5L.
(21) In the foregoing embodiment, the engine 16 is the water-cooled type. The invention is not limited to this. The engine 16 may be the air-cooled type.
(22) In the foregoing embodiment, the straddled vehicle 1 has been illustrated as an example of street type vehicles. The invention is not limited to this. The straddled vehicle 1 may be changed to vehicles of other types, such as the sport type or a vehicle for irregular grounds (ALL-TERRAIN VEHICLE).
(23) In the foregoing embodiment, the number of front wheels 14 is one. The invention is not limited to this. The number of front wheels 14 may be changed to two. In the foregoing embodiment, the number of rear wheels 34 is one. The invention is not limited to this. The number of rear wheels 34 may be changed to two.
(24) In the foregoing embodiment, the engine (internal combustion engine) has been illustrated as power source. The invention is not limited to this. For example, the straddled vehicle 1 may further include an electric motor as power source.
(25) The foregoing embodiment and each of the modified embodiments described in paragraphs (1) to (24) above may be further varied as appropriate by replacing or combining their constructions with the constructions of the other modified embodiments within the scope of the enclosed claims.

## Claims

1. A straddled vehicle (1) comprising:
a body frame (3);
an engine (16) supported by the body frame (3); and
an ignition device (61);
wherein the body frame (3) includes:
a head tube (4) which, in a plan view of the vehicle, overlaps a vehicle center axis (C) extending in a longitudinal direction (X) of the vehicle;
a right main frame (5R) extending rearward from the head tube (4), and disposed more rightward than the vehicle center axis (C); and
a left main frame (5L) extending rearward from the head tube (4), and disposed more leftward than the vehicle center axis (C);
the right main frame (5R) including an oblique portion (5Ra) extending forward and inward to the vehicle center axis (C) and the left main frame (5L) including an oblique portion (5La) extending forward and inward to the vehicle center axis (C); a front end of the oblique portion (5Ra) of the right main frame (5R) being connected to the head tube (4) and a front end of the oblique portion (5La) of the left main frame (5L) being connected to the head tube (4);
a space (S) being formed leftward of the right main frame (5R) and rightward of the left main frame (5L);
at least part of the engine (16) being located below the right main frame (5R) and the left main frame (5L) in a side view of the vehicle; and
the ignition device (61) includes:
a spark plug (63) attached to the engine (16);
a plug cord (65) connected to the spark plug (63); and
an ignition coil (67) connected to the plug cord (65)
**characterized in that**
the ignition coil (67) is located, in the plan view of the vehicle, in one of a position rightward of the oblique portion (5Ra) of the right main frame (5R) and a position leftward of the oblique portion (5La) of the left main frame (5L) and
at least a part of the ignition coil (67) overlaps the oblique portion (5Ra) of the right main frame (5R) or the oblique portion (5La) of the left main frame (5L) in the side view of the vehicle.

2. The straddled vehicle (1) according to claim 1, wherein the ignition coil (67) overlaps at least one of the right main frame (5R) and the left main frame (5L) in the side view of the vehicle.

3. The straddled vehicle (1) according to claim 1 or 2, wherein:
the engine (16) includes a cylinder unit (42) having a combustion chamber (45);
the spark plug (63) is attached to the cylinder unit (42); and
the ignition coil (67) is located more forward than a rear end (P) of the cylinder unit (42).

4. The straddled vehicle (1) according to any one of claims 1 to 3, wherein the spark plug (63) is located below the right main frame (5R) and the left main frame (5L) in the side view of the vehicle.

5. The straddled vehicle (1) according to any one of claims 1 to 4, wherein both the ignition coil (67) and the spark plug (63) are arranged more rightward than the vehicle center axis (C) or more leftward than the vehicle center axis (C).

6. The straddled vehicle (1) according to any one of claims 1 to 5, wherein the spark plug (63) is attached to a side portion (42R) of the engine (16).

7. The straddled vehicle (1) according to any one of claims 1 to 6, wherein the plug cord (65) is connected to a lower part of the ignition coil (67).

8. The straddled vehicle (1) according to any one of claims 1 to 7, wherein:
the plug cord (65) includes a first end (65a) connected to the ignition coil (67); and
the first end (65a) extends downward from the ignition coil (67) in the side view of the vehicle.

9. The straddled vehicle (1) according to any one of claims 1 to 8, wherein the plug cord (65) is supported only by the ignition coil (67) and the spark plug (63).

10. The straddled vehicle (1) according to any one of claims 1 to 9, further comprising:
a steering device (11) rotatable relative to the head tube (4);
an exterior cover (20) overlapping the ignition coil (67) in the side view of the vehicle; and
a bracket (71) supported by the right main frame (5R) or the left main frame (5L), for supporting the ignition coil (67) and the exterior cover (20).

11. The straddled vehicle (1) according to any one of claims 1 to 10, further comprising an external vehicle component (81) disposed in one of a position rightward of the right main frame (5R) and leftward of the plug cord (65), and a position leftward of the left main frame (5L) and rightward of the plug cord (65);
wherein the external vehicle component (81) overlaps at least part of the plug cord (65) in the side view of the vehicle.

12. The straddled vehicle (1) according to any one of claims 1 to 11, further comprising a plurality of internal vehicle components (85, 87, 89, 91, 93) arranged leftward of the right main frame (5R) and rightward of the left main frame (5L) in the plan view of the vehicle.

13. The straddled vehicle (1) according to any one of claims 1 to 12, wherein the plurality of internal vehicle components (85, 87, 89, 91, 93) include a hydraulic unit (85) for regulating brake's hydraulic pressure.

14. The straddled vehicle (1) according to any one of claims 1 to 13, wherein the engine (16) is a single-cylinder engine.

15. The straddled vehicle (1) according to any one of claims 1 to 14, further comprising a fuel tank (17) disposed above the engine (16);
wherein at least part of the fuel tank (17) is located higher than the right main frame (5R) and the left main frame (5L) in the side view of the vehicle.

## Patentansprüche

1. Ein gespreiztes Fahrzeug (1), umfassend:
einen Körperrahmen (3);
einen Motor (16), der von dem Körperrahmen (3) gestützt wird; und
eine Zündeinrichtung (61);
wobei der Körperrahmen (3) beinhaltet:
ein Kopfrohr (4), das in einer Draufsicht des Fahrzeugs eine Fahrzeugmittelachse (C), die sich in einer Längsrichtung (X) des Fahrzeugs erstreckt, überlappt;
einen rechten Hauptrahmen (5R), der sich rückwärts von dem Kopfrohr (4) erstreckt und weiter rechts als die Fahrzeugmittelachse (C) angeordnet ist; und
einen linken Hauptrahmen (5L), der sich rückwärts von dem Kopfrohr (4) erstreckt und weiter links als die Fahrzeugmittelachse (C) angeordnet ist;
wobei der rechte Hauptrahmen (5R) einen schrägen Abschnitt (5Ra) beinhaltet, der sich vorwärts und inwärts zu der Fahrzeugmittelachse (C) erstreckt, und der linke Hauptrahmen (5L) einen schrägen Abschnitt (5La) beinhaltet, der sich vorwärts und inwärts zu der Fahrzeugmittelachse (C) erstreckt, ein vorderes Ende des schrägen Abschnitts (5Ra) des rechten Hauptrahmens (5R) mit dem Kopfrohr (4) verbunden ist und ein vorderes Ende des schrägen Abschnitts (5La) des linken Hauptrahmens (5L) mit dem Kopfrohr (4) verbunden ist;
ein Raum (S) links von dem rechten Hauptrahmen (5R) und rechts von dem linken Hauptrahmen (5L) ausgebildet ist;
zumindest ein Teil des Motors (16) unter dem rechten Hauptrahmen (5R) und dem linken Hauptrahmen (5L) in einer Seitenansicht des Fahrzeugs gelegen ist; und
die Zündeinrichtung (61) beinhaltet:
eine Zündkerze (63), die an dem Motor (16) angebracht ist;
ein Steckerkabel (65), das mit der Zündkerze (63) verbunden ist; und
eine Zündspule (67), die mit dem Steckerkabel (65) verbunden ist,
**dadurch gekennzeichnet, dass**
die Zündspule (67) in der Draufsicht des Fahrzeugs in einer von einer Position rechts des schrägen Abschnitts (5Ra) des rechten Hauptrahmens (5R) und einer Position links des schrägen Abschnitts (5La) des linken Hauptrahmens (5L) gelegen ist und
zumindest ein Teil der Zündspule (67) den schrägen Abschnitt (5Ra) des rechten Hauptrahmens (5R) oder den schrägen Abschnitt (5La) des linken Hauptrahmens (5L) in der Seitenansicht des Fahrzeugs überlappt.

2. Das gespreizte Fahrzeug (1) nach Anspruch 1, wobei die Zündspule (67) zumindest einen von dem rechten Hauptrahmen (5R) und dem linken Hauptrahmen (5L) in der Seitenansicht des Fahrzeugs überlappt.

3. Das gespreizte Fahrzeug (1) nach Anspruch 1 oder 2, wobei:
der Motor (16) eine Zylindereinheit (42) beinhaltet, die eine Verbrennungskammer (45) aufweist;
die Zündkerze (63) an der Zylindereinheit (42) angebracht ist; und
die Zündspule (67) weiter vorne als ein hinteres Ende (P) der Zylindereinheit (42) gelegen ist.

4. Das gespreizte Fahrzeug (1) nach irgendeinem der Ansprüche 1 bis 3, wobei die Zündkerze (63) unter dem rechten Hauptrahmen (5R) und dem linken Hauptrahmen (5L) in der Seitenansicht des Fahrzeugs gelegen ist.

5. Das gespreizte Fahrzeug (1) nach irgendeinem der Ansprüche 1 bis 4, wobei beide von der Zündspule (67) und der Zündkerze (63) weiter rechts als die Fahrzeugmittelachse (C) oder weiter links als die Fahrzeugmittelachse (C) angeordnet sind.

6. Das gespreizte Fahrzeug (1) nach irgendeinem der Ansprüche 1 bis 5, wobei die Zündkerze (63) an einem Seitenabschnitt (42R) des Motors (16) angebracht ist.

7. Das gespreizte Fahrzeug (1) nach irgendeinem der Ansprüche 1 bis 6, wobei das Steckerkabel (65) mit einem unteren Teil der Zündspule (67) verbunden ist.

8. Das gespreizte Fahrzeug (1) nach irgendeinem der Ansprüche 1 bis 7, wobei:
das Steckerkabel (65) ein erstes Ende (65a) beinhaltet, das mit der Zündspule (67) verbunden ist; und sich das erste Ende (65a) abwärts von der Zündspule (67) in der Seitenansicht des Fahrzeugs erstreckt.

9. Das gespreizte Fahrzeug (1) nach irgendeinem der Ansprüche 1 bis 8, wobei das Steckerkabel (65) nur von der Zündspule (67) und der Zündkerze (63) gestützt wird.

10. Das gespreizte Fahrzeug (1) nach irgendeinem der Ansprüche 1 bis 9, weiterhin umfassend:
eine Lenkvorrichtung (11), die relativ zu dem Kopfrohr (4) rotierbar ist;
eine äußere Abdeckung (20), die die Zündspule (67) in der Seitenansicht des Fahrzeugs überlappt; und
eine Klammer (71), die von dem rechten Hauptrahmen (5R) oder dem linken Hauptrahmen (5L) gestützt wird, zum Stützen der Zündspule (67) und der äußeren Abdeckung (20).

11. Das gespreizte Fahrzeug (1) nach irgendeinem der Ansprüche 1 bis 10, weiterhin umfassend eine externe Fahrzeugkomponente (81), die in einer von einer Position rechts von dem rechten Hauptrahmen (5R) und links von dem Steckerkabel (65) und einer Position links von dem linken Hauptrahmen (5L) und rechts von dem Steckerkabel (65) angeordnet ist; wobei die externe Fahrzeugkomponente (81) zumindest einen Teil des Steckerkabels (65) in der Seitenansicht des Fahrzeugs überlappt.

12. Das gespreizte Fahrzeug (1) nach irgendeinem der Ansprüche 1 bis 11, weiterhin umfassend eine Vielzahl von internen Fahrzeugkomponenten (85, 87, 89, 91, 93), die links von dem rechten Hauptrahmen (5R) und rechts von dem linken Hauptrahmen (5L) in der Draufsicht des Fahrzeugs angeordnet sind.

13. Das gespreizte Fahrzeug (1) nach irgendeinem der Ansprüche 1 bis 12, wobei die Vielzahl von internen Fahrzeugkomponenten (85, 87, 89, 91, 93) eine hydraulische Einheit (85) zum Regulieren des Hydraulikdrucks der Bremse beinhaltet.

14. Das gespreizte Fahrzeug (1) nach irgendeinem der Ansprüche 1 bis 13, wobei der Motor (16) ein Einzel-Zylinder-Motor ist.

15. Das gespreizte Fahrzeug (1) nach irgendeinem der Ansprüche 1 bis 14, weiterhin umfassend einen Brennstofftank (17), der über dem Motor (16) angeordnet ist;
wobei zumindest ein Teil des Brennstofftanks (17) höher als der rechte Hauptrahmen (5R) und der linke Hauptrahmen (5L) in der Seitenansicht des Fahrzeugs gelegen ist.

## Revendications

1. Véhicule de type à enfourcher (1), comprenant :
un châssis (3) ;
un moteur (16) supporté par le châssis (3) ; et
un dispositif d'allumage (61) ;
où le châssis (3) comporte :
un tuyau de tête (4) qui, dans une vue en plan du véhicule, recouvre un axe central du véhicule (C) s'étendant dans une direction longitudinale (X) du véhicule ;
un cadre principal droit (5R) s'étendant vers l'arrière à partir du tuyau de tête (4), et disposé plus à droite que l'axe central du véhicule (C) ; et
un cadre principal gauche (5L) s'étendant vers l'arrière à partir du tuyau de tête (4), et disposé plus à gauche que l'axe central du véhicule (C) ;
le cadre principal droit (5R) comprenant une partie oblique (5Ra) s'étendant vers l'avant et vers l'intérieur par rapport à l'axe central du véhicule (C) et le cadre principal gauche (5L) comprenant une partie oblique (5La) s'étendant vers l'avant et vers l'intérieur par rapport à l'axe central du véhicule (C) ; une extrémité frontale de la partie oblique (5Ra) du cadre principal droit (5R) étant connectée au tuyau de tête (4) et une extrémité frontale de la partie oblique (5La) du cadre principal gauche (5L) étant connectée au tuyau de tête (4) ;
un espace (S) étant formé vers la gauche du cadre principal droit (5R) et vers la droite du cadre principal gauche (5L) ;
au moins une partie du moteur (16) étant située en dessous du cadre principal droit (5R) et du cadre principal gauche (5L) dans une vue latérale du véhicule ; et
le dispositif d'allumage (61) comporte :
une bougie d'allumage (63) attachée au moteur (16) ;
un câble de bougie (65) connecté à la bougie d'allumage (63) ; et
une bobine d'allumage (67) connectée au câble de bougie (65)
**caractérisé en ce que**
la bobine d'allumage (67) est située, dans la vue en plan du véhicule, soit dans une position à droite de la partie oblique (5Ra) du cadre principal droit (5R) soit dans une position à gauche de la partie oblique (5La) du cadre principal gauche (5L) et
au moins une partie de la bobine d'allumage (67) se superpose à la partie oblique (5Ra) du cadre principal droit ou la partie oblique (5La) du cadre principal gauche (5L) dans la vue latérale du véhicule.

2. Véhicule de type à enfourcher (1) selon la revendication 1, où la bobine d'allumage (67) se superpose à au moins l'un du cadre principal droit (5R) et du cadre principal gauche (5L) dans la vue latérale du véhicule.

3. Véhicule de type à enfourcher (1) selon la revendication 1 ou 2, où :
le moteur (16) comporte une unité de cylindre (42) ayant une chambre de combustion (45) ;
la bougie d'allumage (63) est attachée à l'unité de cylindre (42) ; et
la bobine d'allumage (67) est située plus en avant qu'une extrémité arrière (P) de l'unité de cylindre (42).

4. Véhicule de type à enfourcher (1) selon l'une quelconque des revendications 1 à 3, où la bougie d'allumage (63) est située en dessous du cadre principal droit (5R) et du cadre principal gauche (5L) dans la vue latérale du véhicule.

5. Véhicule de type à enfourcher (1) selon l'une quelconque des revendications 1 à 4, où à la fois la bobine d'allumage (67) et la bougie d'allumage (63) sont disposées plus à droite que l'axe central du véhicule (C) ou plus à gauche que l'axe central du véhicule (C).

6. Véhicule de type à enfourcher (1) selon l'une quelconque des revendications 1 à 5, où la bougie d'allumage (63) est attachée à une partie latérale (42R) du moteur (16).

7. Véhicule de type à enfourcher (1) selon l'une quelconque des revendications 1 à 6, où le câble de bougie (65) est connecté à une partie inférieure de la bobine d'allumage (67).

8. Véhicule de type à enfourcher (1) selon l'une quelconque des revendications 1 à 7, où :
le câble de bougie (65) comporte une première extrémité (65a) connectée à la bobine d'allumage (67) ; et
la première extrémité (65a) s'étend vers le bas à partir de la bobine d'allumage (67) dans la vue latérale du véhicule.

9. Véhicule de type à enfourcher (1) selon l'une quelconque des revendications 1 à 8, où le câble de bougie (65) est supporté seulement par la bobine d'allumage (67) et la bougie d'allumage (63).

10. Véhicule de type à enfourcher (1) selon l'une quelconque des revendications 1 à 9, comprenant en outre :
un dispositif de direction (11) rotatif par rapport au tuyau de tête (4) ;
un capot extérieur (20) se superposant à la bobine d'allumage (67) dans la vue latérale du véhicule ; et
un support (71) supporté par le cadre principal droit (5R) ou le cadre principal gauche (5L), pour supporter la bobine d'allumage (67) et le capot extérieur (20).

11. Véhicule de type à enfourcher (1) selon l'une quelconque des revendications 1 à 10, comprenant en outre un composant externe du véhicule (81) disposé soit dans une position à droite du cadre principal droit (5R) et à gauche du câble de bougie (65), soit dans une position à gauche du cadre principal gauche (5L) et à droite du câble de bougie (65) ;
où le composant externe du véhicule (81) se superpose à au moins une partie du câble de bougie (65) dans la vue latérale du véhicule.

12. Véhicule de type à enfourcher (1) selon l'une quelconque des revendications 1 à 11, comprenant en outre une pluralité de composants internes du véhicule (85, 87, 89, 91, 93) disposés à gauche du cadre principal droit (5R) et à droite du cadre principal gauche (5L) dans la vue en plan du véhicule.

13. Véhicule de type à enfourcher (1) selon l'une quelconque des revendications 1 à 12, où la pluralité de composants internes du véhicule (85,87,89,91,93) comporte une unité hydraulique (85) pour réguler la pression hydraulique du frein.

14. Véhicule de type à enfourcher (1) selon l'une quelconque des revendications 1 à 13, où le moteur (16) est un moteur monocylindre.

15. Véhicule de type à enfourcher (1) selon l'une quelconque des revendications 1 à 14, comprend en outre un réservoir de carburant (17) disposé au-dessus du moteur (16) ;
où au moins une partie du réservoir de carburant (17) est située plus haut que le cadre principal droit (5R) et que le cadre principal gauche (5L) dans la vue latérale du véhicule.
